Europäisches Patentamt

European Patent Office

Office européen des brevets

(19)

(11) Veröffentlichungsnummer: **0 010 332**
**A1**

(12) **EUROPÄISCHE PATENTANMELDUNG**

(21) Anmeldenummer: **79200587.8**

(22) Anmeldetag: **15.10.79**

(51) Int. Cl.³: **F 16 L 23/02**
**F 16 L 17/02**

(30) Priorität: **25.10.78 LU 80415**

(43) Veröffentlichungstag der Anmeldung:
**30.04.80 Patentblatt 80/9**

(84) Benannte Vertragsstaaten:
**AT BE CH DE FR GB IT NL SE**

(71) Anmelder: **GENERAL TECHNIC s.e.c.s.**
**16 avenue de la Faiencerie**
**L - Luxemburg(LU)**

(72) Erfinder: **Greiveldinger, Roger**
**32 rue J.P. Beicht**
**L - Luxemburg(LU)**

(72) Erfinder: **Daubenfeld, Nico**
**18 rue Oster**
**L - Bridel(LU)**

(74) Vertreter: **Meyers, Ernest et al,**
**c/o FREYLINGER & ASSOCIES Postfach 1153, 46 rue**
**du Cimetière**
**Luxemburg(LU)**

(54) **Kupplungselement sowie Verfahren zur Herstellung desselben.**

(57) Kupplungselement zur Herstellung einer genauen koaxialen Verbindung zwischen den einzelnen Zylinderteilen (11a), (11b) eines Hydraulikzylinderrohrs, insbesondere für Aufzüge.

Die aneinanderstossenden Teile (11a), (11b) sind mit zur Zylinderbohrung konzentrischen Abdrehungen (12a), (12b) über welche eine Zentrierbuchse (13) gestülpt ist versehen und werden über Verbindungselemente (15) zusammengezogen.

FIG.1

Croydon Printing Company Ltd.

1

Die Erfindung betrifft ein Kupplungselement zum Verbinden von Zylinderteilen, insbesondere für ein Hydraulikzylinderrohr eines Aufzuges, sowie ein Verfahren zur Herstellung der Verbindung.

Die bisher bekannten Hydraulikzylinder für Aufzüge waren in ihrer gesamten Länge aus einem einzigen Stück hergestellt. Die Herstellung solcher langer Hydraulikzylinder ist fertigungstechnisch begrenzt und wird mit zunehmender Länge auch unwirtschaftlich. Ein weiterer Nachteil solcher langer Zylinder liegt in der problematischen Handhabung sowie den begrenzten Einbaumöglichkeiten. Desweiteren muss bei örtlicher Beschädigung der Zylinderinnenwand der gesamte Hydraulikzylinder ausgewechselt werden. Zur Vermeidung dieser Nachteile bietet sich die Möglichkeit an den Hydraulikzylinder aus mehreren Zylinderteilen begrenzter Länge zusammenzusetzen. Dadurch werden zwar die oben erwähnten Nachteile ausgeschaltet, es hat sich jedoch herausgestellt, dass bei aus einzelnen Zylinderstücken zusammengesetzten Hydraulikzylindern eine rasche Zerstörung der Abdichtungen des in dem Zylinder beweglichen Kolbens auftritt. Dies macht sich in einer ausserordentlichen kurzen Lebensdauer dieser Abdichtungen bemerkbar, welche öfters ausgewechselt werden müssen. Dies ist nicht tragbar und spricht gegen eine Zusammensetzung des Hydraulikzylinders aus einzelnen Zylinderteilen. Dieser Nachteil wird offensichtlich als unabwendbar hingenommen und es wurde bislang auf die doch an sich äusserst vorteilhafte Zusammensetzung des Hydraulikzylinders aus mehreren Zylinderteilen verzichtet.

Der Erfindung liegt die Aufgabe zugrunde ein Kupplungselement zu schaffen, durch welches einzelne Zylinderteile zu einer Zylindereinheit unbegrenzter Länge miteinander verbunden werden können, ohne dass die Abdichtungen des in der Zylindereinheit beweglichen Kolbens rasch beschädigt werden.

Erfindungsgemäss wird diese Aufgabe dadurch gelöst, dass die miteinander zu verbindenden Zylinderteile an ihren Enden jeweils eine zur Zylinderbohrung konzentrische Abdrehung aufweisen, dass eine die Zylinderbohrung koaxial

2

zueinander festlegende Zentrierbuchse auf die Abdrehungen der stumpf aufeinander gesetzten Zylinderteile aufgesetzt ist, und dass beide Zylinderteile durch Verbindungselemente zusammengezogen sind.

Durch ein Kupplungselement mit diesen erfindungsgemässen Merkmalen werden die Zylinderteile mit ihren Innendurchmessern genau konzentrisch zueinander montiert und es hat sich herausgestellt, dass dabei die Beschädigung der Abdichtungen des Kolbens wesentlich verringert wird. Es wurde nämlich festgestellt, dass die Ursache für das oben beschriebene Vorurteil der Fachwelt gegen die Zusammensetzung des Hydraulikzylinders aus mehreren Zylinderteilen im wesentlichen darauf beruht, dass man noch nicht erkannt hatte, dass die rasche Beschädigung der Kolbenabdichtungen nicht durch die Stosstelle zwischen den Zylinderteilen selbst, sondern durch die mangelnde Genauigkeit der konzentrischen Montage der Zylinderteile bedingt ist. Bei Verwendung der erfindungsgemässen Kupplungselemente können die Hydraulikzylinder mit Erfolg aus einzelnen Zylinderteilen zusammengesetzt werden, da nun die koaxiale Montage der Zylinderteile sichergestellt ist.

Um ein Lecken des Hydraulikfluides an der Verbindungsstelle zweier Zylinderteile zu verhindern, kann jeweils ein Dichtungsring zwischen der Zentrierbuchse und der konzentrischen Abdichtung jedes Zylinderteiles vorgesehen sein.

Vorzugsweise erfolgt das Zusammenziehen der Zylinderteile über Druckringe mit zugeordneten Flanschen, welche über die Verbindungselemente zusammengezogen werden, wie in den Ansprüchen 3, 4 und 5 gekennzeichnet ist.

Die Beschädigung der Kolbendichtung kann noch weiter herabgesetzt werden falls, entsprechend Anspruch 6, die Bohrungen der Rohrstücke an den miteinander zu verbindenden Enden abgerundet sind.

Das Merkmal nach Anspruch 7 gewährleistet, dass beim Auswechseln eines Zylinderteiles die Zentrierbuchse vollständig auf den benachbarten Zylinderteil geschoben wird.

Das Verfahren zum Verbinden zweier Zylinderteile, insbesondere des Hydraulikzylinders eines Aufzuges ist dadurch gekennzeichnet, dass jeder Zylinderteil auf einem Konus zentriert und auf seiner Aussenseite konzentrisch abgedreht wird, dass die abgedrehten Zylinderteile mittels einer Zentrierbuchse koaxial festgelegt und anschliessend zusammengezogen werden. Dabei kann zum koaxialen Festlegen der Zylinderteile die Zylinderbuchse zuerst auf die Abdrehung eines Zylinderteiles aufgesetzt werden so dass ein Ende der Zentrierbuchse über das Ende dieses Zylinderteiles hinausragt und anschliessend kann der zweite Zylinderteil mit seiner Abdrehung in die Zentrierbuchse gesteckt und gegen den ersten Zylinderteil geschoben werden.

Ein Ausführungsbeispiel des erfindungsgemässen Kupplungselementes ist in der beiliegenden Zeichnung dargestellt und wird im folgenden ausführlicher beschrieben. Es zeigen:

Figur 1, das Kupplungselement entsprechend der Erfindung im Axialschnitt;

Figur 2, ein Ende eines Zylinderteiles, welches auf einem Konus zentriert und mit einer Abdrehung versehen ist;

Figur 3, ein Ende eines abgedrehten Zylinderteiles, welches mit einem Druckring und einem Flansch versehen ist;

Figur 4, das, entsprechend Figur 3, mit einem Druckring und einem Flansch versehene, abgedrehte Ende eines Zylinderteiles wobei zusätzlich eine Zentrierbuchse auf das freie Ende des abgedrehten Zylinderteiles aufgesetzt ist.

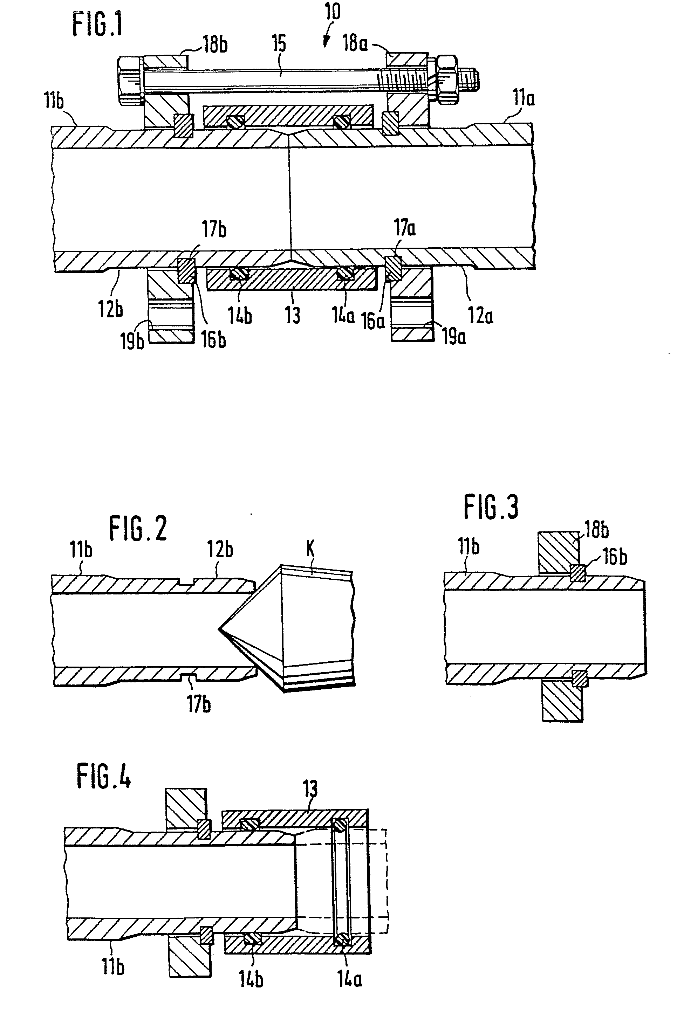

In der Figur 1 ist das Kupplungselement insgesamt mit 10 bezeichnet. Die zwei miteinander zu verbindenden Zylinderteile 11a und 11b, in welchen ein Kolben (nicht dargestellt) beweglich ist haben an ihrem freien Ende jeweils eine Abdrehung 12a, 12b, welche konzentrisch zum lichten Innendurchmesser der beiden Zylinderteile ausgeführt ist. Eine Zentrierbuchse 13 umfasst die Stosstelle der beiden stumpf aufeinander gesetzten Zylinderteile 11a und 11b und legt die Zylinderbohrungen koaxial zueinander fest. Abdichtungsringe 14a und 14b sind in Umfangsnuten der Zen-

4

trierbuchse 13 angeordnet und verhindern ein Lecken des Hydraulikfluides zwischen den Abdrehungen 12a, 12b der Zylinderteile 11a, 11b und der Innenseite der Zentrierbuchse 13. Zum Zusammenziehen der beiden Zylinderteile 11a, 11b sind Verbindungselemente 15 vorgesehen, welche bei dem dargestellten Ausführungsbeispiel aus mehreren Schrauben mit Muttern bestehen. Auf jedem Zylinderteil 11a, 11b sind Druckringe 16a, 16b in Nuten 17a, 17b eingesetzt, welche an den Abdrehungen 12a, 12b vorgesehen sind. Flansche 18a, 18b befinden sich auf den den freien Enden der Zylinderteile 11a, 11b abgewandten Seiten der Druckringe 16a bzw. 16b. Die Flansche 18a, 18b haben mehrere in Umfangsrichtung verteilte und miteinander fluchtende Bohrungen 19a, 19b in welche die Schrauben eingesetzt sind. Beim Anziehen dieser Schraube legen sich die Flansche 18a, 18b fest gegen die Druckringe 17a bzw. 17b und ziehen die Zylinderteile 11a, 11b somit fest gegeneinander. Dabei bleibt die genaue koaxiale Ausrichtung der Innenbohrungen der Zylinderteile 11a und 11b erhalten. Es können auch andere Verbindungselemente benutzt werden, wie z.B. eine Verschraubung mit Ueberwurfmutter, oder dergleichen.

Das Verfahren zum Verbinden der beiden Zylinderteile wird nun mit Bezug auf die Figuren 2, 3 und 4 ausführlicher beschrieben.

Zuerst wird ein Ende eines Zylinderteiles, z.B. 11b auf einem Konus K zentriert und die Aussenseite dieses Zylinderteiles wird konzentrisch zu seinem Innendurchmesser auf einer Länge abgedreht die mindestens der Länge der Zentrierbuchse (13) entspricht (Figur 2). Dabei kann gleichzeitig die Nut 17b für den Druckring 16b eingestochen werden. Anschliessend wird das Ende des anderen Zylinderteiles 11a in gleicher Weise auf dem Konus K zentriert und bearbeitet.

Danach wird ein Flansch 18a, 18b auf jeden Zylinderteil 11a, bzw. 11b aufgeschoben, und ein Druckring 16a, 16b in jede Nut 17a bzw. 17b eingesetzt, wie in Figur 3 dargestellt ist.

5

Schliesslich wird, entsprechend Figur 4, die Zentrierbuchse 13 mit den Dichtungsringen 14a und 14b auf ein Ende eines Zylinderteiles, z.B. 11b aufgeschoben, so dass ein Ende dieser Buchse über das Ende dieses Zylinderteiles hinausragt. Anschliessend wird das Ende des anderen Zylinderteiles 11a, in Figur 4 gestrichelt dargestellt, in die Zentrierbuchse 13 gesteckt und gegen dasjenige des ersten Zylinderteiles (11b) geschoben.

Die beiden Zylinderteile sind nun mit ihren Innendurchmessern genau koaxial zueinander montiert und die Verbindung kann durch Einsetzen der Schrauben und Anziehen der Muttern fertiggestellt werden, wobei sich die Flansche 18a, 18b gegen die Druckringe 16a bzw. 16b legen und dementsprechend die Zylinderteile 11a, 11b zusammenziehen.

Zum Auswechseln eines Zylinderteiles, z.B. 11a werden die Verbindungselemente 15 gelöst, der Druckring 17b sowie der Flansch 18b werden entfernt und die Zentrierbuchse 13 wird ganz auf den Zylinderteil 11b geschoben. Nachdem auch das andere Ende des auszuwechselnden Zylinderteiles gelöst wurde kann er einfach seitlich herausgenommen und durch einen neuen Zylinderteil ersetzt werden. Danach wird die Zentrierbuchse 13 wieder über die Stosstelle geschoben und die Verbindungselemente 15 werden wieder angebracht.

6

Patentansprüche
=============================

1. Kupplungselement zum Verbinden von Zylinderteilen, insbesondere für ein Hydraulikzylinderrohr eines Aufzuges, dadurch gekennzeichnet, dass die miteinander zu verbindenden Zylinderteile (11a), (11b) an ihrem Ende jeweils eine zur Zylinderbohrung konzentrische Abdrehung (12a), (12b) aufweisen, dass eine die Zylinderbohrungen koaxial zueinander festlegende Zentrierbuchse (13) auf die Abdrehungen der stumpf aufeinander gesetzten Zylinderteile (11a), (11b) aufgesetzt ist, und dass beide Zylinderteile durch Verbindungselemente zusammengezogen sind.

2. Kupplungselement nach Anspruch 1, dadurch gekennzeichnet, dass jeweils ein Dichtungsring (14a), (14b) zwischen der Zentrierbuchse (13) und der konzentrischen Abdrehung (12a), (12b) jedes Zylinderteiles (11a), (11b) vorgesehen ist.

3. Kupplungselement nach Anspruch 1 oder 2, dadurch gekennzeichnet, dass jeder Zylinderteil (11a), (11b) mit einem Druckring (16a), (16b) und einem zugeordneten Flansch versehen ist und die Flansche beider Zylinderteile (11a), 11b) über die Verbindungselemente zusammengezogen sind.

4. Kupplungselement nach Anspruch 3, dadurch gekennzeichnet, dass die Druckringe (16a), (16b) beidseitig der Zentrierbuchse (13) an den Zylinderteilen (11a), (11b) festgelegt sind.

5. Kupplungselement nach Anspruch 4, dadurch gekennzeichnet, dass die Druckringe (16a), (16b) in Eindrehungen (17a), (17b) der Zylinderteile (11a), (11b) sitzen.

6. Kupplungselement nach einem der Ansprüche 1 bis 5, dadurch gekennzeichnet, dass die Bohrungen der Zylinderteile (11a), (11b) an den miteinander zu verbindenden Enden abgerundet sind.

7. Kupplungselement nach einem der Ansprüche 1 bis 6, dadurch gekennzeichnet, dass die Länge jeder Abdrehung min-

destens der Länge der Zentrierbuchse entspricht.

8. Verfahren zum Verbinden zweier Zylinderteile, insbesondere des Hydraulikzylinders eines Aufzuges, dadurch gekennzeichnet, dass jeder Zylinderteil (11a), (11b) auf einem Konus zentriert und auf seiner Aussenseite konzentrisch abgedreht wird, dass die abgedrehten Zylinderteile (11a), (11b) mittels einer Zentrierbuchse (13) koaxial festgelegt und anschliessend zusammengezogen werden.

9. Verfahren nach Anspruch 8, dadurch gekennzeichnet, dass zum koaxialen Festlegen der Zylinderteile (11a), (11b) die Zentrierbuchse (13) zuerst auf die Abdrehung eines Zylinderteiles aufgesetzt wird, so dass ein Ende der Zentrierbuchse (13) über das Ende dieses Zylinderteiles hinausragt und anschliessend der zweite Zylinderteil mit seiner Abdrehung in die Zentrierbuchse gesteckt und gegen den ersten Zylinderteil geschoben wird.

1/1

FIG.1

FIG.2

FIG.3

FIG.4

**EUROPÄISCHER RECHERCHENBERICHT**

0010332
Nummer der Anmeldung

EP 79200587.8

Europäisches Patentamt

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 050 544 (DAPRA GEB. BERGHEM)<br>+ Gesamt +<br>-- | 1,2,3,4 |
| | US - A - 3 937 501 (WEINHOLD)<br>+ Figur 1 +<br>-- | 1,2,3,4 |
| | AT - B - 278 454 (MANNESMANN)<br>+ Figur 1 +<br>-- | 1,3,4,5 |
| | US - A - 3 861 724 (SPINNER)<br>+ Figuren 1 und 2 +<br>-- | 1,3,4,5 |
| | US - A - 2 081 021 (B.F. SMITH et al.)<br>+ Figur 1 +<br>-- | 1,3,4,5 |
| | DE - A - 2 453 672 (AB VEBE)<br>+ Gesamt +<br>-- | 1,2,3 |
| | DE - A - 2 104 860 (THE MEAD CORPORATION)<br>+ Figuren 8 und 9 +<br>-- | 1,2,6 |
| | DE - C - 318 640 (NORSK HYDRO)<br>+ Gesamt +<br>---- | 1,3,5 |

**KLASSIFIKATION DER ANMELDUNG (Int.Cl.³)**

F 16 L 23/02
F 16 L 17/02

**RECHERCHIERTE SACHGEBIETE (Int. Cl.³)**

F 16 L 17/00
F 16 L 17/02
F 16 L 19/00
F 16 L 19/02
F 16 L 23/00
F 16 L 23/02
F 16 L 23/04

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| WIEN | 17-12-1979 | SCHUGANICH |

EPA form 1503.1  06.78